# EUROPEAN PATENT APPLICATION

(11) **EP 1 788 772 A1**
(43) Date of publication of application: **23.05.2007**
(21) Application number: 05292442.0
(22) Date of filing: 18.11.2005
(51) Int. Cl.: H04L 29/06

(54) **Method for transmitting data to a terminal via simultaneous cached and uncached transmission sessions**

(71) Applicant: Alcatel Lucent, 75008 Paris (FR)
(72) Inventor: Faye, Jean-Claude, 91170 Gif sur Yvette (FR)
(74) Representative: Schäfer, Wolfgang

(57) **Abstract**

The present invention relates to a method of transmitting data to a terminal (10), wherein said data is cached.

The method is characterized by the following steps:
- establishing (100) a first data transmission session to the terminal (10), wherein data transmitted via said first session is not cached, and
- establishing (110) a second data transmission session to the terminal (10), wherein data transmitted via said second session is cached.

## Description

The present invention relates to a method of transmitting data to a terminal, wherein said data is cached.

The present invention further relates to a data transmission system comprising a terminal and a server, wherein data transmitted between said server and said terminal is cached.

Data transmission methods and systems of the above mentioned type are per se known and comprise various disadvantages.

Firstly, caching data as known from conventional systems and methods causes a delay that is e.g. experienced by a user of said terminal upon initiating a cached data transmission because prior to forwarding any of said transmitted data to the user of the terminal, a corresponding cache memory is filled. Consequently, during the period in which said cache memory is initially filled with transmitted data, said data or any services related to it, respectively, are not available to the user. Depending on the size of the cache memory and an available data transmission rate, this delay may be unacceptable for the user.

Secondly, during such a cached data transmission, a cache underrun may occur, i.e. at a certain time the cache memory may not be filled with a sufficient amount of data anymore. This may e.g. be due to interruptions of said data transmission that for example occur in discontinuous coverage networks, in particular with mobile terminals, wherein said interruptions prevent the cache from being filled with a sufficient data rate. In these cases, a problem similar to the above-described situation may arise in that after such a cache underrun, a further delay may be experienced by the user of the terminal due to a further phase of filling the cache memory instead of immediately forwarding the data to the terminal's user.

It is therefore an object of the present invention to provide an improved method of transmitting data to a terminal and an improved data transmission system which reduces or completely avoids the above mentioned delays a user of the terminal may experience with prior art methods and systems.

According to the present invention, said object is achieved by the following steps:
- establishing a first data transmission session to the terminal, wherein data transmitted via said first session is not cached, and
- establishing a second data transmission session to the terminal, wherein data transmitted via said second session is cached.

The inventive approach providing for two data transmission sessions to the terminal enables to immediately supply the terminal or a user of the terminal, respectively, with transmitted data, i.e. the inventive method advantageously avoids the delay caused by initially filling a cache within prior art systems.

Establishing said first data transmission which does not provide for caching said transmitted data, enables to promptly provide said data to the terminal or to a user of said terminal. On the other hand, establishing said second data transmission which provides for a caching mechanism provides for the advantages related to a cached data transmission. Thus, the inventive method avoids disturbing delays known from prior art cached transmission systems and nevertheless offers the increased security of a cached data transmission.

It is important to note that during said second data transmission session, at least initially, i.e. when filling the cache, data need not be transmitted directly to the terminal. Establishing said second data transmission session to the terminal also comprises transmitting data to any form of cache memory prior to supplying said cached data to the terminal.

According to a first very advantageous embodiment of the present invention, said first session and said second session are established simultaneously, i.e. without a substantial delay. A simultaneous establishment of both data transmission sessions on the one hand provides for a prompt delivery of transmitted data to the terminal or its user and on the other hand ensures that a cache memory involved in the cached data transmission is filled as soon as possible.

According to a further advantageous embodiment of the present invention, said first data transmission session is closed if a cache memory, which is being filled during said second session has reached a predefined filling status. In this case, the complete future data transmission to the terminal may be performed via the second session and it is not necessary to maintain the first, uncached data transmission anymore, whereby data transmission resources are freed and thus become available again for further users or data transmissions.

I.e., if the cache memory has reached its predefined filling status, the terminal's user is provided with data from the previously filled cache memory, while the cache is permanently being refilled via the second data transmission session.

Since directly after the initialization of the inventive data transmission sessions, a certain amount of data is delivered to the terminal without being cached by means of the first data transmission session, said certain amount of data need not be filled into the cache memory via the second data transmission. Thus, the second data transmission may start with transmitting data blocks to the cache memory which are to be forwarded to the user in future.

According to another advantageous embodiment of the present invention, the data transmitted via said second session is cached within a network element which is at least temporarily assigned to said terminal. Such a network element may e.g. be a router, a base station, an access point or any other network entity which may comprise a cache memory and which may e.g. be used by the terminal to access a server, a backbone network or other kinds of network segments.

In these cases it is not necessary to extend both data transmission sessions to the terminal, because only the first, uncached data transmission session is used to promptly deliver data to the terminal. The second data transmission session which is initially used for filling the cache may first be established with e.g. the network entity comprising the cache memory. After said cache memory has sufficiently been filled, the first session may be terminated and the second session may correspondingly be extended directly to the terminal, as described above.

Yet another advantageous embodiment of the present invention is characterized in that data transmitted via said second session is cached within said terminal.

If the terminal is capable of maintaining both inventive data transmission sessions, the terminal may initially be provided with uncached data to enable a prompt delivery to the user and with cached data to fill its local cache memory.

However, if the cache memory for caching data during the inventive second data transmission session is provided within a further network element, i.e. not directly within the terminal, the terminal's local cache may additionally be used for caching data transmitted to the terminal.

A further very advantageous embodiment of the present invention is characterized in that said transmitted data is streaming data. In this case, the application of the inventive method is especially beneficial because interruptions in a data transmission of streaming data are highly undesired.

A further solution to the object of the present invention is given by a data transmission system according to claim 7.

The inventive data transmission system is characterized by being configured to
- establish a first data transmission session to the terminal, wherein data transmitted via said first session is not cached, and to
- establish a second data transmission session to the terminal, wherein data transmitted via said second session is cached.

Advantageous embodiments of the inventive data transmission system are given in the dependent claims.

Further advantages and features of the present invention are described in the following detailed description with reference to the drawings in which:
- Fig. 1: shows a simplified flow chart depicting a first embodiment of the method according to the present invention, and
- Fig. 2: shows a typical scenario employing a second embodiment of the inventive method.

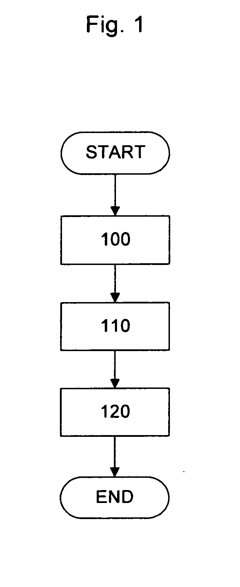

Figure 1 shows a simplified flowchart depicting a first embodiment of the method according to the present invention.

According to step 100 of the flowchart, firstly a data transmission session to a terminal is established, wherein data transmitted via said first session is not cached.

Secondly, in step 110 a second data transmission session to the terminal is established. In contrast to the first session which has previously been established within step 100, data transmitted via said second session is cached.

By establishing said first uncached session, it is ensured to immediately provide said terminal or its user, respectively, with transmitted data without any delays that may be caused by filling a cache memory as known from prior art systems.

Furthermore, the second session according to the present invention enables to employ a caching mechanism which is particularly useful when transmitting streaming data to said terminal, because interruptions of the data transmission may be compensated for by delivering data which has been previously cached.

Finally, if a cache memory that is being filled during said second session has reached a predefined filling status, said first session is closed within step 120, and thus corresponding data transmission resources are made available to further terminals.

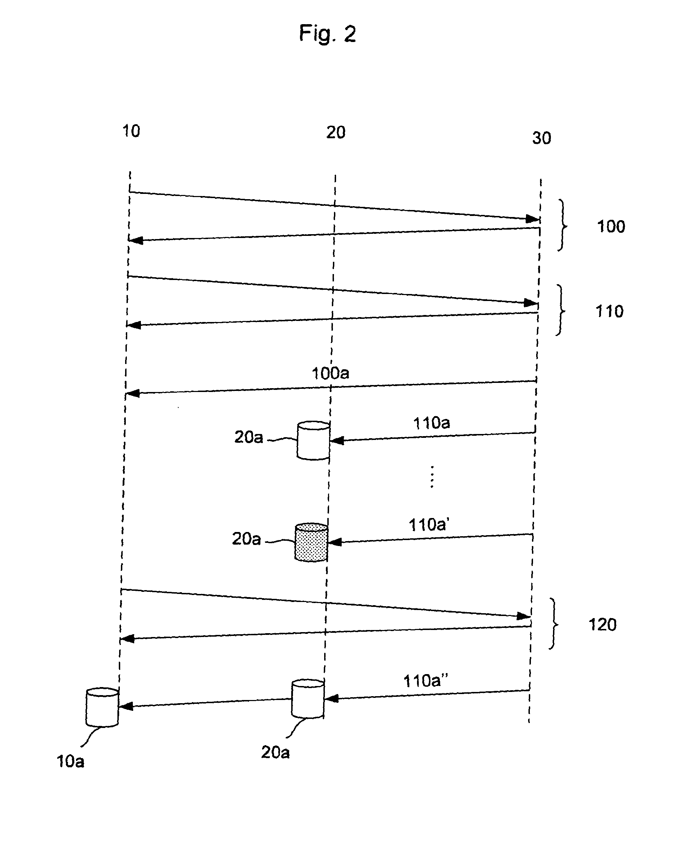

Figure 2 shows a typical scenario for the application of the inventive method. As can be gathered from figure 2, within step 100 of the method according to the present invention, a first data transmission session between the terminal 10 and the server 30 is established. The arrows denoted with numeral 100 in figure 2 represent the corresponding messages that are exchanged between the terminal 10 and the server 30 and are not described in further detail.

After establishing the first, uncached data transmission session, a second data transmission session, which is a cached data transmission session, is also established between terminal 10 and server 30, cf. arrows 110 or step 110 of figure 1, respectively. The second data transmission session is preferably established simultaneously with or immediately after establishing the first data transmission session.

After that, server 30 starts transmitting data to said terminal 10, which is symbolized by arrow 100a depicted in figure 2. The arrow 100a represents the first, uncached data transmission session which promptly provides the terminal 10 with the desired data, particularly without delays as known from prior art systems.

Furthermore, in the course of the second, cached data transmission session, said server 30 also transmits data to a network element 20 which comprises a cache memory 20a. Said cached data transmission is characterized by arrow 110a in figure 2. As long as the cache memory 20a does not comprise a predetermined filling status, server 30 continues to transmit data cached to said network element 20 in order to fill the cache memory 20a. This is indicated by the dots and the further arrow 110a' depicted in figure 2.

The network element 20 may e.g. be a router, a base station, an access point or any other network entity which may comprise a cache memory 20a and which may e.g. be used by the terminal 10 to access a server 30, a backbone network or other kinds of network segments.

After that, i.e. if said cache memory 20a has reached a predetermined filling status, which is symbolized in figure 2 by a grey shaded representation of said cache memory 20a, the first data transmission session is cancelled, cf. the arrows 120 of figure 2.

Correspondingly, any further data transmission from the server 30 to the terminal 10 may now be accomplished via said network element 20 and its cache memory 20a. Said further data transmission is performed by providing data 110a" from the server 30 to the network element 20, by caching said data within the cache memory 20a of the network element 20, and by forwarding cached data from said network element 20 to said terminal 10.

According to a further advantageous embodiment of the present invention, said terminal 10 may also comprise a local cache memory 10a which may e.g. be filled by data that has previously been cached by the network element 20. Thereby, a dual caching mechanism is formed.

According to another advantageous embodiment of the present invention, it is also possible to transmit data to be cached from the server 30 directly to the terminal 10 or its cache memory 10a, respectively, in the course of said cached second data transmission.

Although according to the previously described embodiments of the present invention, the data transmission has been performed between the server 30 and the terminal 10, the basic principle of the present invention may also be applied to any other cached data transmission, i.e. also data transmissions between a plurality of terminals or other network elements or entities, respectively.

## Claims

1. Method of transmitting data to a terminal (10), wherein said data is cached, **characterized by** the following steps:
- establishing (100) a first data transmission session to the terminal (10), wherein data transmitted via said first session is not cached, and
- establishing (110) a second data transmission session to the terminal (10), wherein data transmitted via said second session is cached.

2. Method according to claim 1, **characterized by** simultaneously establishing said first session and said second session.

3. Method according to one of the claims 1 to 2, **characterized by** closing said first session if a cache memory (10a, 20a) which is being filled during said second session has reached a predefined filling status.

4. Method according to one of the claims 1 to 3, **characterized in that** data transmitted via said second session is cached within a network element (20) which is at least temporarily assigned to said terminal (10).

5. Method according to one of the preceding claims, **characterized in that** data transmitted via said second session is cached within said terminal (10).

6. Method according to one of the preceding claims, **characterized in that** said transmitted data is streaming data.

7. Data transmission system comprising a terminal (10) and a server (30), wherein data transmitted between said server (30) and said terminal (10) is cached, **characterized in that** said system is configured to
- establish (100) a first data transmission session to the terminal (10), wherein data transmitted via said first session is not cached, and to
- establish (110) a second data transmission session to the terminal (10), wherein data transmitted via said second session is cached.

8. System according to claim 7, **characterized by** being configured to perform the method according to any of the claims 1 to 6.

9. System according to one of the claims 7 to 8, **characterized by** a cache memory (10a, 20a) for temporarily storing transmitted data.
